# EUROPÄISCHE PATENTANMELDUNG

(11) **EP 1 320 049 A1**
(43) Veröffentlichungstag der Anmeldung: **18.06.2003**
(21) Anmeldenummer: 01129857.7
(22) Anmeldetag: 14.12.2001
(51) Int. Cl.: G06F 17/60

(54) **Verfahren und Vorrichtung zum Abgeben von Preisangeboten für den Erwerb von Waren durch einen Kaufinteressenten**

(71) Anmelder: Lebhaft, Tibor, Dr. med., 86643 Rennertshofen (DE)
(72) Erfinder: Lebhaft, Tibor, Dr. med., 86643 Rennertshofen (DE)
(74) Vertreter: Schmitz, Hans-Werner, Dipl.-Ing.

(57) **Zusammenfassung**

Die Erfindung betrifft ein Verfahren zum Abgeben von Preisangeboten für den Erwerb von Waren durch einen Kaufinteressenten, mit folgenden Schritten:
die Ware wird von einem Verkäufer mit einem Etikett (10) ausgezeichnet, welches elektronisch und/oder optisch erfassbare Daten (11) enthält, wobei die Daten (11) zumindest eine Code-Nummer und einen Preis beinhalten,
zumindest die Code-Nummer der Ware wird elektronisch oder händisch von dem Kaufinteressenten in einen Minirechner (20) eingelesen bzw. eingegeben,
ein Preisangebot des Kaufinteressenten wird händisch in den Minirechner (20) eingegeben und dort gespeichert,
die Code-Nummer der Ware, das Preisangebot des Kaufinteressenten und in dem Minirechner (20) gespeicherte Identifizierungsdaten des Kaufinteressenten werden an ein Terminal (30) übermittelt, um von dort an den Verkäufer zur Prüfung des Preisangebotes und ggf. Abwicklung des Verkaufs weitergeleitet zu werden.

Außerdem betrifft die Erfindung eine Vorrichtung zur Durchführung des erfindungsgemäßen Verfahrens.

Diese Maßnahmen sollen es einem Kaufinteressenten ermöglichen, ein Preisangebot für eine Ware abzugeben, ohne in direkten Kontakt mit dem Verkäufer treten zu müssen.

## Beschreibung

Die vorliegende Erfindung betrifft ein Verfahren und eine Vorrichtung zum Abgeben von Preisangeboten für den Erwerb von Waren durch einen Kaufinteressenten.

Der Verkauf einer Ware erfolgt in aller Regel so, dass ein Kaufinteressent eine ihn interessierende Ware sieht, anschließend den Preis z. B. über ein Etikett, einen Katalog, eine Nachfrage beim Verkäufer usw. ermittelt, den Preis ggf. akzeptiert und bezahlt und damit die Ware erwirbt.

Häufig ist dem Kaufinteressenten die Ware aber zu teuer und er tritt von seiner ursprünglichen Kaufabsicht zurück, obwohl er die Ware zu einem geringeren Preis gekauft hätte. Dazu müsste er mit dem Verkäufer aber über den Preis verhandeln. In vielen Fällen ist jedoch gerade kein Verkäufer zur Stelle oder aber das Geschäft ist geschlossen. Denkbar ist auch, dass es dem Kaufinteressenten unangenehm ist, mit dem Verkäufer zu feilschen. Im Ergebnis kommt jedenfalls kein Kauf zustande, obwohl der Kaufinteressent an der Ware interessiert ist und der Verkäufer auch gerne ein Geschäft machen möchte.

Es ist deshalb Aufgabe der vorliegenden Erfindung, ein Verfahren und eine Vorrichtung anzugeben, welche es einem Kaufinteressenten ermöglicht, ein Preisangebot für eine Ware abzugeben, ohne in direkten Kontakt mit dem Verkäufer treten zu müssen.

Diese Aufgabe wird durch ein Verfahren zum Abgeben von.Preisangeboten für den Erwerb von Waren durch einen Kaufinteressenten, mit folgenden Schritten gelöst:
die Ware wird von einem Verkäufer mit einem Etikett ausgezeichnet, welches elektronisch und/oder optisch erfassbare Daten enthält, wobei die Daten zumindest eine Code-Nummer und einen Preis beinhalten,
zumindest die Code-Nummer der Ware wird elektronisch oder händisch von dem Kaufinteressenten in einen Minirechner eingelesen bzw. eingegeben,
ein Preisangebot des Kaufinteressenten wird händisch in den Minirechner eingegeben und dort gespeichert,
die Code-Nummer der Ware, das Preisangebot des Kaufinteressenten und in dem Minirechner gespeicherte Identifizierungsdaten des Kaufinteressenten werden an ein Terminal übermittelt, um von dort an den Verkäufer zur Prüfung des Preisangebotes und ggf. Abwicklung des Verkaufs weitergeleitet zu werden.

Eine Vorrichtung zum Abgeben von Preisangeboten für den Erwerb von Waren durch einen Kaufinteressenten und weist die folgenden Komponenten auf:
ein an der Ware befindliches Etikett, welches zumindest eine Code-Nummer und einen Preis beinhaltet,
ein vom Kaufinteressenten verwendeter Minirechner, der elektronische, optische und/oder händische Eingabemöglichkeiten aufweist, und
ein mit einem Lese-Portal versehenes Terminal zur Aufnahme von Daten, welche vom Minirechner übermittelt werden.

Das Verfahren bzw. die Vorrichtung bringen eine Vielzahl von Vorteilen mit sich. Zum einem kann der Kaufinteressent in aller Ruhe die Ware aussuchen und begutachten und dann sein Preisangebot abgeben. Dies ist gerade bei Menschen von Vorteil, die zurückhaltend veranlagt sind und sich nicht trauen zu feilschen. Auch wenn gerade kein Verkäufer zur Stelle ist, ist die Abgabe eines Preisangebotes möglich. Das erfindungsgemäße Verfahren bietet dem Händler auch die Möglichkeit, sein Personal zu reduzieren, da weniger Verkäufer benötigt werden.

Vorteilhafte Weiterbildungen ergeben sich aus den Unteransprüchen.

Damit der Kaufinteressent eine Bestätigung über sein Preisangebot bekommt, ist nach einer erfindungsgemäßen Weiterbildung vorgesehen, dass von dem Terminal eine Quittung über das Preisangebot ausgestellt wird, welche insbes. auf den Minirechner übertragen wird.

Das Erfassen der Daten von dem Etikett und das Übertragen der Daten auf das Terminal kann gemäß einer bevorzugten Ausgestaltung in beliebiger Form, z. B. elektronisch, optisch, per Funk usw. über ein Lesegerät, eine Tastatur oder berührungslos erfolgen. Damit ist das erfindungsgemäße Verfahren beliebig einsetzbar und kann an die unterschiedlichsten Anforderungen angepasst werden.

Gemäß einer besonderen Weiterbildung sind die auf dem Etikett angegebenen Daten optisch und/oder elektronisch erfassbar. Dies kann z.B. über einen Strichcode, einen Magnetstreifen, eine optische Abtastung usw. erfolgen.

Damit der Minirechner die auf dem Etikett angegebenen Daten erfassen kann, ist der Minirechner vorzugsweise mit einem Lesegerät versehen. Wenn das Lesegerät aber nicht zum Einsatz kommen kann, z. B. weil das Geschäft geschlossen ist und deshalb das Etikett nicht abgetastet werden kann, ist erfindungsgemäß vorgesehen, dass der Minirechner zusätzlich mit einer Tastatur versehen ist. Über diese kann der Kaufinteressent dann die Daten des Etiketts in den Minirechner eingeben. Außerdem dient die Tastatur auch zur Eingabe des Preisangebotes in den Minirechner.

Gemäß einer bevorzugten Weiterbildung ist das Lesegerät als Chipkarten-Leser ausgebildet. Solche Lesegeräte sind leicht zu beschaffen und stellen eine zukunftssichere und verlässliche Einrichtung dar.

Insbesondere, wenn die Daten auf dem Etikett in Form eines Strich-Codes vorhanden ist, ist es vorteilhaft, wenn gemäß einer weiteren Ausgestaltung das Lesegerät ein Scanner ist. Somit können die erforderlichen Daten schnell und einfach erfasst werden.

Damit neben dem heutzutage üblichen Handy nicht noch ein zweites Gerät mitgeführt werden muss, ist nach einer bevorzugten Weiterbildung vorgesehen, dass der Minirechner in ein Handy integriert ist und/oder als Geldkarte dient. Damit sind eine Vielzahl von notwendigen Geräten auf engstem Raum vereinigt.

Das in Verbindung mit dem Minirechner verwendete Terminal ist vorteilhafterweise für Lese- und Schreibmodi eingerichtet, damit sowohl die vom Minirechner empfangenen Daten eingelesen als auch z. B. eine Quittung ausgeben werden kann. Damit auch bei geschlossenen Geschäften die Abgabe eines Preisangebotes ermöglicht wird, kann das Terminal auch außerhalb der Geschäftsräume angebracht sein.

Weitere Einzelheiten, Merkmale und Vorteile der Erfindung ergeben sich aus nachfolgender Beschreibung eines bevorzugten Ausführungsbeispiels anhand der Zeichnungen. Es zeigen:
- Fig. 1: eine schematische Ablaufskizze der erfindungsgemäßen Verfahrensschritte,
- Fig. 2: ein in Verbindung mit dem erfindungsgemäßen Verfahren verwendetes Etikett,
- Fig. 3: ein in Verbindung mit dem erfindungsgemäßen Verfahren verwendeter Minirechner,
- Fig. 4: ein in Verbindung mit dem erfindungsgemäßen Verfahren verwendetes Terminal, und
- Fig. 5: ein in Verbindung mit dem erfindungsgemäßen Verfahren verwendetes Lese- und Schreib-Portal.

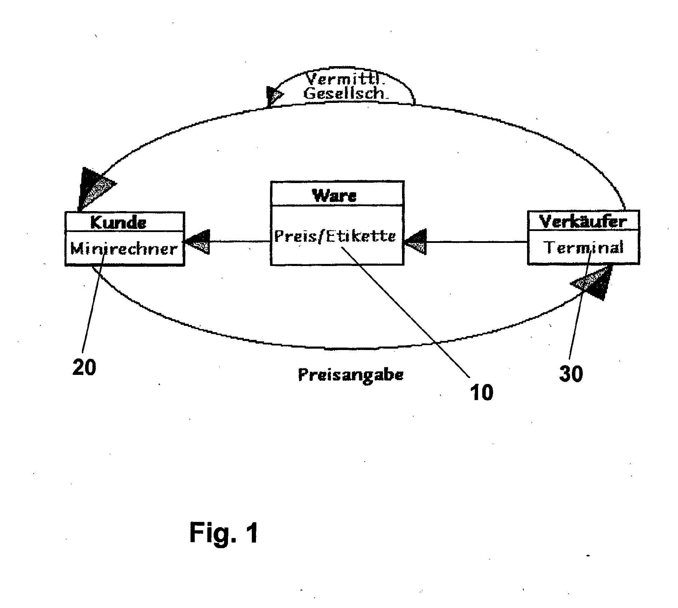

In Fig. 1 ist das erfindungsgemäße Verfahren anhand einer Prinzipskizze erläutert. Ein Verkäufer erstellt für eine zu verkaufende Ware ein Etikett 10. Dazu kann er sich entweder eines handelsüblichen Gerätes bedienen, oder auf einen Minirechner 20 zurückgreifen, der später noch erläutert werden wird. Mit Hilfe dieses Minirechners 20 erstellt der Verkäufer ein Etikett 10, welches Daten 11 über die zugehörige Ware enthält. Diese Daten 11 können sowohl in verschlüsselter Form, z. B. als Strich-Code oder Magnetstreifen, als auch in Klarschrift vorhanden sein. Eine verschlüsselte Form hat den Vorteil, dass die Daten 11 von einem entsprechenden Lesegerät leicht erfasst werden können, während die Klarschrift auch ein Erfassen, z. B. über eine Tastatur ermöglicht, wenn die Ware bzw. das Etikett 10 nicht direkt zugänglich ist, z. B. wenn das Geschäft geschlossen und die Ware nur im Schaufenster zu sehen ist.

Das mit den Informationen über die Ware versehene Etikett 10 wird anschließend an der Ware.

Ein potentieller Kaufinteressent verfügt über einen Minirechner 20, der in der Lage ist, die auf dem Etikett 10 angegebenen Daten 11 zu erfassen. Dies kann über ein entsprechendes elektronisches Lesegerät, wie Scanner, Chipkarten-Leser, Strich-Code-Leser usw. erfolgen oder über eine an dem Minirechner 20 vorgesehene Tastatur 21, über die der Kaufinteressent die Daten 11 eingibt.

Nachdem der Kaufinteressent die waren-spezifischen Daten 11 in seinen Minirechner 20 eingelesen bzw. eingegeben hat, gibt er über die Tastatur 21 ein Preisangebot für die Ware ein, welches er zu zahlen bereit ist. Die sich nun auf dem Minirechner 20 befindlichen Daten bestehen somit aus einer zur Identifizierung der gewünschten Ware bestehenden Informationen und aus einem Preisangebot.

Diese Daten überträgt der Kaufinteressent von seinem Minirechner 20 auf ein Terminal 30. Die Übertragung kann dabei in beliebiger Weise erfolgen, z. B. drahtlos per Funk, über Infrarot, über eine lösbare Steckverbindung, über eine Chipkarte, über elektrooptische Verfahren usw. Entsprechend der gewählten Übertragungsart ist der Minirechner 20 und das Terminal 30 mit entsprechenden Ausgabe- bzw. Eingabemitteln versehen, sodass eine Übertragung der Daten vom Minirechner 20 auf das Terminal 30 einfach und sicher erfolgen kann. Außer Daten zu Identifizierung der Ware und dem Preisangebot werden auch noch Daten zur Identifizierung des Kauinteressenten auf das Terminal 30 übertragen, damit erkennbar ist, wer das Angebot gemacht hat.

Vom Terminal 30 aus werden die Daten dann an einen Verkäufer übertragen bzw. von diesem abgerufen. Der Verkäufer prüft das Angebot und tritt mit dem Kaufinteressenten entweder direkt oder über eine Vermittlungsgesellschaft in Kontakt, wenn das Preisangebot akzeptabel ist, um das Geschäft abzuwickeln.

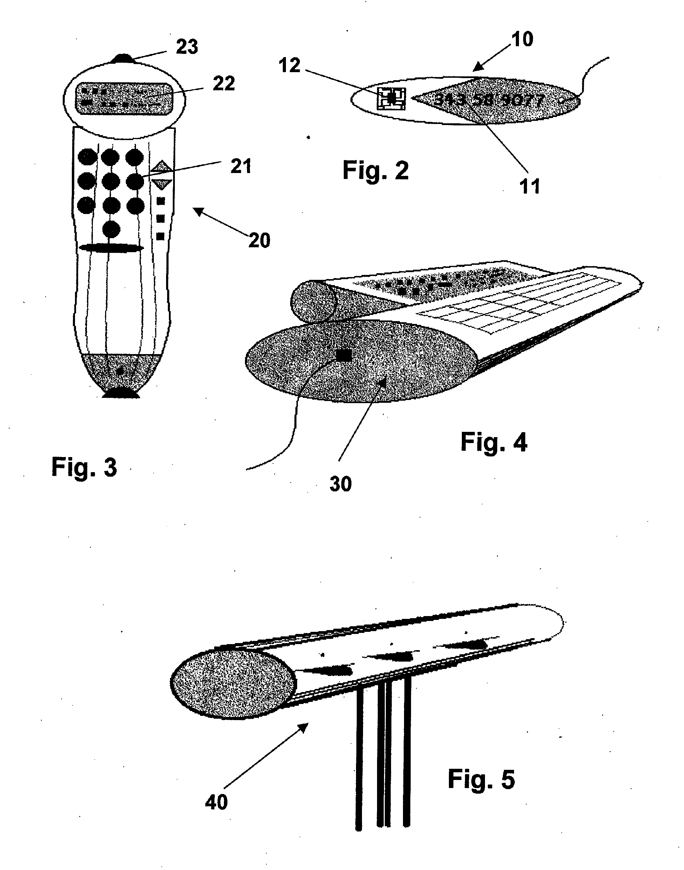

In Fig. 2 ist ein Etikett 10 dargestellt, welches in Verbindung mit dem erfindungsgemäßen Verfahren Verwendung finden kann. Man erkennt z. B. eine Identifizierungsnummer und eine Chip-Karte 12, auf der Informationen über die Ware in elektronischer Form gespeichert sind. Außerdem kann auch noch der gewünschte Preis für die Ware in Klarschrift angegeben sein.

Fig. 3 zeigt einen Minirechner 20 zur Verwendung mit dem erfindungsgemäßen Verfahren. Der Minirechner 20 weist ein Handformat auf und ist mit einer Tastatur 21 zur Eingabe von Werten, einem Display 22 zur Anzeige von Werten und einer Leseund eine Ausgabeeinrichtung 23 versehen, um Daten zu empfangen bzw. auszugeben. Außerdem sind in dem Minirechner 20 die zur Abwicklung des Geschäftes erforderlichen Daten über den Kaufinteressenten fest gespeichert.

In Fig. 4 ist ein Terminal 30 dargestellt, welches ebenfalls in Verbindung mit dem erfindungsgemäßen Verfahren Verwendung findet. Das Terminal 30 kann die vom Minirechner 20 ausgegebenen Daten empfangen und darüber hinaus eine Quittung über die empfangenen Daten ausgeben. Dazu ist eine entsprechende Ausgabeeinrichtung vorgesehen, z. B. ein Drucker. Die Quittung kann sowohl in Papierform vorliegen als auch in digitalisierter Form auf dem Minirechner 20 abgelegt werden, wo sie transient gespeichert bleibt.

In Fig. 5 ist ein Lese-Schreib-Portal 40 gezeigt, welches an dem Terminal 30 vorgesehen ist, um die Daten zu empfangen bzw. die Quittung auszugeben.

Das Terminal 30 kann an beliebiger Stelle im Geschäft oder aber auch außerhalb der Geschäftsräume vorgesehen sein, um einen ungehinderten Zugang zu dem Terminal 30 auch außerhalb der Geschäftszeiten zu ermöglichen.

Die Datenerfassung und -übertragung erfolgt über eine übliche Chipkaten-Technologie, welche hier nicht näher erläutert ist. Auch das Software-Programm zur Ausführung der kommunikativen Schritte ist nicht näher beschrieben.

Der im Zusammenhang mit dem erfindungsgemäßen verwendete Minirechner kann auch in ein Handy integriert werden und/oder gleichzeitig die Funktion einer Geldkarte ausüben.

Das erfindungsgemäße Verfahren kann natürlich nicht nur dann verwendet werden, wenn man den geforderten Kaufpreis unterbieten möchte. Vielmehr kann das erfindungsgemäße Verfahren auch zur leichten und einfachen Bestellung von Waren verwendet werden. Wenn ein Kaufinteressent z. B. außerhalb der Geschäftszeiten oder aus Zeitmangel keinen Kauf abwickeln kann, besteht mit Hilfe des erfindungsgemäßen Verfahrens die Möglichkeit, die Identifikationsdaten über die gewünschte Ware auf den Minirechner 20 zu laden und diese dann zusammen mit anderen Angaben, z. B. über Preis und Menge, Lieferzeitpunkt sowie über seine Identifikationsdaten an das Terminal 30 zu übertragen. Somit kann der Kaufinteressent ein Bestellung zu jeder beliebigen Zeit abgeben.

Außerdem kann das System auch noch mit zusätzlichen Funktionen, wie z. B. für Meinungsumfragen, Infos, Werbungen und Gratisgewinnverlosungen ausgebaut werden.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

Nachzutragen ist, dass auch der oder die Verkäufer einen Minirechner haben können, der zur Preisauszeichnung der Waren verwendet werden kann. Hierzu kann der Verkäufer mit seinem Minirechner am Terminal 30 Warendaten, Codenummern und insbesondere den jeweiligen Preis einlesen und dann direkt mit Hilfe dieser in seinen eigenen Minirechner eingelesenen Daten die jeweilige Ware vor Ort auszeichnen.

## Patentansprüche

1. Verfahren zum Abgeben von Preisangeboten für den Erwerb von Waren durch einen Kaufinteressenten, mit folgenden Schritten:
die Ware wird von einem Verkäufer mit einem Etikett (10) ausgezeichnet, welches elektronisch und/oder optisch erfassbare Daten (11) enthält, wobei die Daten (11) zumindest eine Code-Nummer und einen Preis beinhalten,
zumindest die Code-Nummer der Ware wird elektronisch oder händisch von dem Kaufinteressenten in einen Minirechner (20) eingelesen bzw. eingegeben,
ein Preisangebot des Kaufinteressenten wird händisch in den Minirechner (20) eingegeben und dort gespeichert,
die Code-Nummer der Ware, das Preisangebot des Kaufinteressenten und in dem Minirechner (20) gespeicherte Identifizierungsdaten des Kaufinteressenten werden an ein Terminal (30) übermittelt, um von dort an den Verkäufer zur Prüfung des Preisangebotes und ggf. Abwicklung des Verkaufs weitergeleitet zu werden.

2. Verfahren nach Anspruch 1, wobei dem Kaufinteressenten von dem Terminal (30) eine Quittung über das Preisangebot ausgestellt wird, welche insbes. auf den Minirechner (20) übertragen wird.

3. Verfahren nach einem der vorhergehenden Ansprüche, wobei der Datenaustausch in beliebiger Form, z. B. elektronisch, optisch, per Funk usw. über ein Lesegerät, eine Tastatur oder berührungslos erfolgen kann.

4. Vorrichtung zum Abgeben von Preisangeboten für den Erwerb von Waren für einen Kaufinteressenten mit folgenden Komponenten:
einem an der Ware befindlichen Etikett (10), welches zumindest eine Code-Nummer und einen Preis beinhaltet,
ein vom Kaufinteressenten verwendeter Minirechner (20), der elektronische, optische und/oder händische Eingabemöglichkeiten aufweist, und
ein mit einem Lese-Portal versehenes Terminal (30) zur Aufnahme von durch den Minirechner (20) übermittelbaren Daten.

5. Vorrichtung nach Anspruch 4, wobei die auf dem Etikett (10) angegebenen Daten optisch und/oder elektronisch erfassbar sind.

6. Vorrichtung nach einem der Ansprüche 4 und 6, wobei der Minirechner (20) mit einem Lesegerät (23) und mit einer Tastatur (21) versehen ist.

7. Vorrichtung nach einem der Ansprüche 4 bis 6, wobei das Lesegerät (23) ein Chipkarten-Leser ist.

8. Vorrichtung nach einem der Ansprüche 4 bis 7, wobei das Lesegerät (23) ein Scanner ist.

9. Vorrichtung nach einem der Ansprüche 4 bis 8, wobei der Minirechner (20) in ein Handy integriert ist und/oder als Geldkarte dient.

10. Vorrichtung nach einem der Ansprüche 4 bis 9, wobei das Terminal (30) für Lese- und Schreibmodi eingerichtet ist.

11. Vorrichtung nach einem der Ansprüche 4 bis 10, **gekennzeichnet durch** einen oder weitere Minirechner für den oder die Verkäufer, die zur Preisauszeichnung der Ware verwendbar sind.
